# EUROPEAN PATENT APPLICATION

(11) **EP 3 960 409 A1**
(43) Date of publication of application: **02.03.2022**
(21) Application number: 21193748.7
(22) Date of filing: 30.08.2021
(51) Int. Cl.: B28B 7/00, B28B 17/00, F16B 21/07, F16B 21/16, B28B 5/12

(54) **LOCKING DEVICE AND METHOD FOR FASTENING A MOULD TO A MOULD HOLDER UNIT, AND MOULD COMPRISING SAID LOCKING DEVICE**

(30) Priority: 28.08.2020 IT 202000020611
(71) Applicant: Bongioanni Macchine S.p.A., 12045 Fossano (Cuneo) (IT)
(72) Inventor: GIACCARDI, Silvio, FOSSANO (CN) (IT)
(74) Representative: Robba, Pierpaolo

(57) **Abstract**

Locking device (10) for fastening a mould (110) to a mould holder unit (100), comprising: first fastening means (11) adapted to be associated with a mould holder unit (100); second fastening means (20) adapted to be associated with a mould (110); wherein said first fastening means comprise a locking seat (13), and wherein said second fastening means (20) comprise locking means (33) configured to engage in said locking seat (13), first control members (35) adapted to bias said locking means (33) into engagement with said locking seat (13) and second control members (25) adapted to cause the disengagement of said locking means (33) from said locking seat (13), and wherein, in the course of normal use, said locking means (33) are engaged with said locking seat (13) under the action of said first control members (35) and said second control members (25) can be actuated to disengage said locking means (33) from said locking seat (13). A mould (110) comprising at least one such locking device (10) and a method of releasably locking a mould (110) to a mould holder unit (100) using the locking device (10) are also claimed.

## Description

### Technical Field

The subject-matter of the present invention is a locking device for fastening a mold to a mold holder unit. The invention further relates to a locking method for fastening a mold to a mold holder unit as well as to a mold comprising said device.

The device according to the invention allows installing molds having a specific shape onto mold holder units of industrial machineries.

Particularly, the device according to the invention mainly, though not exclusively, finds application in the installation of molds with a specific shape onto brick-making presses, said molds being adapted to shape manufactured products usually made of a plastic mixture of clay and water.

### Prior Art

According to prior art, the shaping of a manufactured product of the brick type takes place by means of the pressure exerted by a movable part, referred to as compressor, of a press, which part compresses, by means of a desmodromic cam mechanism or a hydraulic cylinder, a plastic mixture of clay and water into the space defined between two molds. Due to the fact that the press is usually oriented with the movement of the movable part along a vertical axis, a first mold, generally associated with the compressor and thus movable during the compression stroke, is defined as upper mold, and a second mold, generally stationary during the compression stroke, is defined as lower mold or counter-mold. According to prior art, the upper and lower molds are shaped in such a way that a space is defined between them to give the molded product the desired shape and consistency.

The upper mold is attached to the compressor by means of an upper mold holder unit, equipped with a mold holder plate with which the upper mold can be rigidly associated. The lower mold, instead, is attached to another movable press component, whose function is to bring the lower mold under the compressor, at each compression cycle, thus ensuring continuous operation of the machinery.

According to the commonest prior art, a brick-making press can be of the mechanical or hydraulic type, depending on the kind of technology used for generating the compression force. The generic brick-making press is configured for being equipped with one or more upper molds, associated with the compressor and with a corresponding number of lower molds, associated with the movable part (also referred to as drum, for example having six faces, in the case of a mechanical press, or table in the case of a hydraulic press). Each specific type of manufactured product to be shaped, for example tiles of various kinds such as pantiles, Marseille tiles, Portuguese tiles, requires a set of dedicated molds.

According to prior art, at present the lower molds are associated with the movable part or drum by means of a mechanical connection established by means of a stud element or captive bolt, usually having a cylindrical shape, associated with the movable part or drum. The lower mold is provided with a corresponding hole capable of engaging a portion of said stud element projecting from the drum. The stud element is provided with a blind or through hole and, once the mold is associated with said stud element, stable fastening of the mold to the drum takes place by applying a screw and a washer inside the hole of the stud element.

This solution of locking the lower mold to the movable part or drum is particularly disadvantageous in that in order to carry out adjusting and fastening of the mold or exchanging said mold with another one having a different shape, the operator has to get an appropriate actuation wrench for screwing/unscrewing the corresponding screws that hold the mold locked to the drum. This locking solution employing screws makes the operation time-consuming and difficult for the operator and has a significant impact on downtime costs.

Solutions intended for fastening the lower mold to the movable part and controlled by suitable hydraulic systems are also known. However, in the case of a movable part or drum, for example having six faces, which must rotate continuously on the mechanical press, these fastening solutions employing hydraulic systems are particularly complex and expensive to implement. The known hydraulic systems, besides being complex, are also prone to failures that lead to increased downtimes and consequent production losses.

Another type of device for locking a mold to a mold holder unit is described in document JP S61 177810U.

Examples of locking devices are described in documents US 10 513 362 B2 and EP 0 233 113 A1. However, the locking devices described in said documents do not refer to locking a mold to a mold holder unit and are rather complex.

A first object of the present invention is therefore to provide a solution to the problem of how to make fastening of a mold to a mold holder unit faster and stabler by overcoming the drawbacks of prior art.

Another object of the invention is to provide a solution to the aforesaid problem that allows to reduce the times required for replacing the mold on the mold holder unit and for adjusting the mold to said mold holder unit, and thus to reduce machine downtimes.

A further object of the invention is to provide a locking device for fastening a mold to a mold holder unit that is robust and reliable as well as industrializable in a cost-effective manner.

A further but not last object of the invention is to provide a locking device for fastening a mold to a mold holder unit which can also be applied to already existing molds and corresponding mold holder units.

These and other objects are achieved with a locking device for fastening a mold to a mold holder unit and with a mold comprising said locking device as claimed in the appended claims.

### Disclosure of the Invention

The locking device according to the invention comprises first fastening means adapted to be associated to a mold holder unit and comprising a locking seat, and second fastening means adapted to be associated with a mold and comprising locking means configured to engage in said locking seat. The second fastening means further comprise first control members adapted to bias said locking means into engagement with said locking seat, and second control members adapted to cause the disengagement of said locking means from said locking seat.

Thanks to this arrangement, the locking device of the invention allows quick and stable fastening of said mold to the mold holder unit by means of a simple pressure on said mold onto said mold holder unit and unlocking the mold by means of a control exerted onto said second control members.

The first fastening means comprise a stud element or captive bolt associated with the mold holder unit. The stud element or captive bolt has a body with a substantially cylindrical shape ad is further provided with hole, which can be either a through hole or a blind hole. The stud element has a first, usually threaded, portion allowing coupling of said stud element to the mold holder unit, and a second portion projecting from the mold holder unit. The hole of the stud element is accessible from the side of the mold holder unit arranged to receive the mold to be locked.

Advantageously, the second portion of the stud element has a locking seat adapted to receive a mold to be fastened to the mold holder unit. Preferably, the locking seat comprises a notch provided on the outer surface of the body of the stud element. More preferably, the locking seat comprises an annular channel or groove extending in the body of the stud element in a plane transverse to a longitudinal axis of said stud element.

The second fastening means associated with the mold advantageously comprise a pressure locking/unlocking assembly.

Said pressure locking/unlocking assembly comprises in turn a support structure in which the locking means, the first control members and the second control members are provided. Preferably, the second control members comprise a pusher element having a centering portion for engagement with an actuation device and at least one tapered portion, and first elastic means for imparting an axial sliding movement to said pusher element.

Preferably, the support structure of the pressure locking/unlocking assembly is configured to be associated with an already existing model of mold to be fastened. Alternatively, the support structure of the pressure locking/unlocking assembly may be formed directly in the structure of the mold to be fastened.

Preferably, the pusher element is configured to take a first position, or mold-locking position, in which the first elastic means are not biased and the pusher element is in a raised position, distal with respect to the mold holder unit, and a second position, or moldunlocking position, in which the first elastic means are compressed and the pusher element is in a lowered position, closer to the mold holder unit.

Preferably, the tapered portion of the pusher element is defined by a pair of conical tips, more preferably "V"-shaped, oriented toward the mold when said pressure locking/unlocking assembly is associated with a corresponding mold.

Preferably, the centering portion of the pusher element comprises a peg which is associated with a through hole provided centrally on said pusher element and extends axially from both sides of said pusher element.

A first portion of the peg extends toward the mold when said pressure locking/unlocking assembly is associated with the mold, and a second portion of the peg extends in a direction away from the mold. The second portion of the peg is arranged to act as a guide for a corresponding actuation device and is shaped to engage in a centering seat provided on the actuation device, whereas the first portion of the peg is arranged to engage in the hole of the stud element of the first fastening means, which act as a guide as well. In addition, the first portion is shaped in such a way as to facilitate unlocking of the mold by means of a control exerted by the actuation device.

The pressure locking/unlocking assembly further comprises locking means associated with respective first control members preferably comprising second elastic means allowing creating an elastic connection to the locking seat of the first fastening means in a direction substantially transverse to a longitudinal axis of the first fastening means.

Preferably, the locking means comprise at least two coplanar latches, and the corresponding second elastic means comprise helical springs suitably calibrated in order to create an elastic connection to the locking seat of the first fastening means. More preferably, the latches are configured to radially engage the locking seat of the first fastening means.

Advantageously, the stud element comprises, at its end facing outwards, i.e. its end intended to receive a corresponding mold when said mold is associated with a corresponding mold holder unit, a chamfered leading surface cooperating with the pressure locking/unlocking assembly to facilitate locking of the mold to the mold holder unit. In addition, the locking means of the pressure locking/unlocking assembly also comprise a chamfered surface oriented toward the mold holder unit when said mold is associated or is ready to be associated with the mold holder unit. Advantageously, the chamfered surface of the stud element of the first fastening means and the chamfered surface of the locking means are complementary to each other and cooperate with each other to facilitate quick locking of the mold to the mold holder unit by means of a simple pressure exerted onto said mold in order to associate the mold to the mold holder unit.

The locking device according to the invention further comprises an actuation device configured to actuate said second control members in order to cause the disengagement of said locking means from said locking seat. The locking device may be removable and may be provided with a first handle portion and a second portion carrying a seat for the engagement with said centering portion of the pusher element. In a semi-automatic version, the actuation device is operated by an operator, whereas in an automatic version the actuation device is operated by a handling device, for example a robot or the like.

Advantageously, the first and second fastening means are configured in such a way that quick and stable locking of a respective mold to a respective mold holder unit takes place by means of a simple pressure of the mold onto said mold holder unit, and unlocking of the mold from the mold holder unit takes place by means of a control exerted by the actuation device onto said second control members.

Preferably, the first elastic means associated with the pusher element comprise helical springs suitably calibrated to keep the pusher element in a first raised position in the absence of a pressure exerted on the pusher element, or to allow the pusher element to be brought into a second lowered position, in which the tapered portion of the pusher element is received in a seat provided between the locking means. In this position, the tapered portion of the pusher element allows to spread apart the locking means, by acting against the force of the first control members controlling the locking means, and move said locking means away from the locking seat, thus disengaging the mold from the mold holder unit.

The principle of operation of the locking device according to the invention will be briefly described below.

Advantageously, in order to establish locking of a corresponding mold to a respective mold holder unit it is sufficient to exert a simple pressure in an axial direction onto the mold with which the pressure locking/unlocking assembly is associated, which pressure allows engagement of the locking seat provided on the first fastening means associated with the mold holder unit.

When the mold to be locked is brought proximal to the mold holder unit and moved close thereto, the chamfered surface of the locking means of the mold locking/unlocking assembly comes into contact with the chamfered surface of the first fastening means and thanks to the axial pressure exerted onto said mold the locking means are allowed to radially engage the locking seat provided on the first fastening means.

The engagement or locking of the mold takes place by overcoming the elastic force of the corresponding second elastic means adapted to actuate the locking means. The locking means are spread apart by virtue of the axial pressure exerted onto the pusher element and owing to the fact that they abut against the first fastening means associated with the mold holder unit. The complementary and mutually cooperating chamfered surfaces facilitate the engagement of the mold with the mold holder unit, by sliding the mold in an axial direction until it encounters the locking seat. When the locking means, sliding axially, encounter the locking seat, engagement of the mold with the mold holder unit is achieved by virtue of the elastic force of the second elastic means, which have been compressed during their axial sliding. The locking means radially engage the locking seat, thus creating an elastic connection. In this locking position, the first elastic means associated with the pusher element are not biased, and the pusher element is in a raised position, in order to ensure that the mold remains locked to the mold holder unit.

The unlocking of the mold takes place by means of a control exerted by the actuation device onto the pusher element. The actuation device operated manually by an operator in a semi-automatic version, or by a handling device in an automatic version, engages the centering portion of the pusher element and, by means of an axial pressure and a rotational movement, causes the chamfered portion of the pusher element to move closer to the locking means by overcoming at first the elastic force of the first elastic means. Specifically, the chamfered portion of the pusher element is received in an appropriate seat defined between the locking means and, thanks to the tapered shape of said portion of the pusher element, the locking means become spread apart, thus compressing the second elastic means. In this unlocking position, the locking means come out of the locking seat provided on the fastening means, thus allowing the mold to be removed or released from the mold holder unit. Furthermore, by rotating the actuation device it is possible to achieve locking of the pusher element in a lowered position thereof, in which removal of the mold from the mold holder unit is allowed.

The invention further provides a mold comprising at least one locking device as previously described. More preferably, the mold according to the invention comprises two locking devices associated laterally with transversely opposite ends of said mold in order to make fastening of the mold to the mold holder unit stronger and stabler.

The invention is particularly advantageous in that it allows quick automatic locking of a mold to a mold holder unit by means of a simple pressure of said mold onto the mold holder unit. In addition, the locking device according to the invention can be associated with a plurality of already existing mold models.

The invention finds particular, though not exclusive, application in locking a mold to a mold holder unit in a brick-making press. In brick-making presses, the mold holder unit usually comprises a rotating drum, for example a six-faced rotating drum. In this case, the first fastening means will be adapted to be associated with one of the faces of said drum.

### Brief Description of the Drawings

Some preferred embodiments of the invention will be provided by way of nonlimiting examples with reference to the annexed drawings, in which:
- Fig. 1 is a perspective view of a mold holder unit with which a mold equipped with locking devices according to the invention has been associated;
- Fig. 2 is a partial detailed view of a mold equipped with a locking device according to the invention;
- Fig. 3 is an exploded view of a locking device according to the invention;
- Fig. 4 is a sectional view of a locking device according to the invention, in which said device is locked to a mold holder unit.

### Detailed Description of Embodiments of the Invention

In the following detailed description, reference will be made to an application of the invention to a mold holder unit and a mold of a brick-making press. Such application, however, should not be intended in a limiting sense.

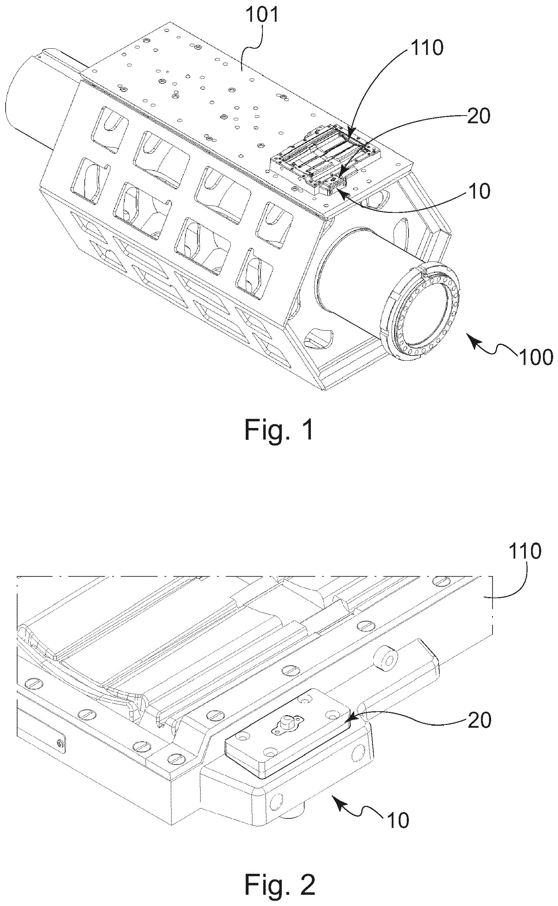

Referring to Figs. 1 and 2, there is illustrated a mold holder unit 100 which, in the embodiment shown, comprises a movable part, particularly a six-faced rotating drum, as usually provided in brick-making presses.

A mold 110, preferably a brick-making lower mold, has been fastened to a corresponding face 101 of said drum by means of a locking device 10 according to the invention.

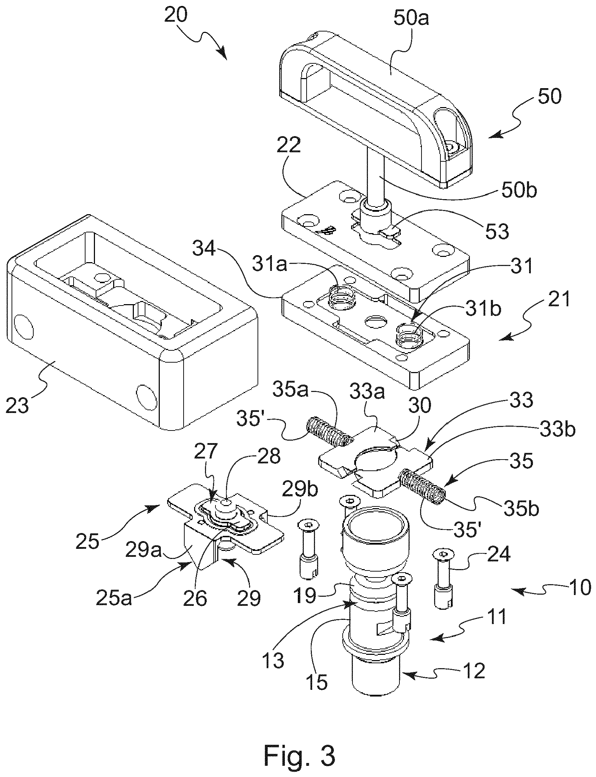

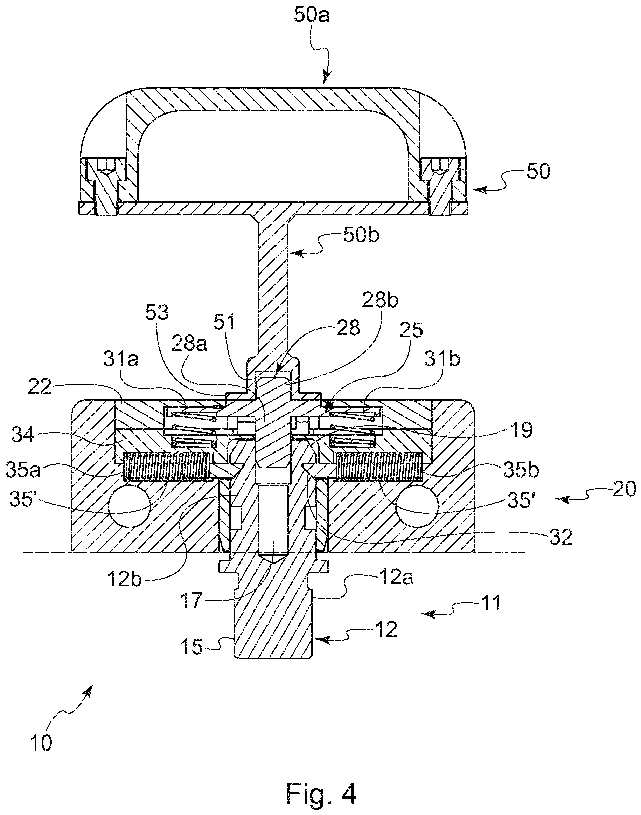

Said locking device 10 is illustrated in more detail in Figs 3 and 4.

The locking device 10 according to the invention comprises first fastening means 11 adapted to be associated with a mold holder unit 100 and comprising a locking seat 13, and second fastening means 20 adapted to be associated with a mold 110 and comprising locking means 33 configured to engage in the locking seat 13. The second fastening means 20 further comprise first control members 35 adapted to bias said locking means 33 into engagement with the locking seat 13, and second control members 25 adapted to cause the disengagement of said locking means 33 from the locking seat 13.

Thanks to this arrangement, the locking device 10 of the invention allows quick and stable fastening of said mold to the mold holder unit by means of a simple pressure of the mold 110 onto said mold holder unit 100 and unlocking the mold by means of a control exerted onto the second control members 25.

The locking device 10 further comprises an actuation device 50 configured to actuate said second control members 25 to cause the disengagement of said locking means 33 from said locking seat 13.

The first fastening means 11 comprise a stud element 12 or captive bolt capable of being associated with the mold holder unit 100, particularly, in the illustrated embodiment, to a face 101 of the drum of the mold holder unit 100. The stud element 12 has a body 15 having a substantially cylindrical shape and is provided with a hole 17. In the illustrated embodiment, the hole 17 of the stud element is a blind hole. In other embodiments, the hole 17 of the stud element may be a through hole. The stud element 12 has a first, usually threaded, portion 12a, allowing coupling of said stud element 12 to the face 101 of the drum of the mold holder unit 100, and a second portion proj ecting from said face 101 of said drum when the stud element 12 is associated therewith.

Advantageously, the second portion 12b of the stud element 12 has a locking seat 13 adapted to receive a corresponding mold 110 to be fastened to the face 101 of the drum of the mold holder unit 100.

In the illustrated embodiment, the locking seat 13 comprises an annular indentation or groove extending uninterruptedly over the circumference of the cylindrical body 15 of the stud element 12 in a plane transverse to a longitudinal axis of said stud element 12. More particularly, the annular channel or groove contributes to define a reduction in the circumferential diameter in the cylindrical body 15 of the stud element 12. In other embodiments, the locking seat 13 may comprise several grooves or channels provided in the body 15 of the stud element 12 and suitably arranged to allow optimal locking of the mold 110 to the mold holder unit 100.

According to the invention, the second fastening means 20 of the locking device 10 adapted to be associated with the mold 110 advantageously comprise a pressure locking/unlocking assembly 21.

The pressure locking/unlocking assembly 21 comprises in turn a support structure 23 in which the locking means, the first control members and the second control members are provided. In the illustrated embodiment, the second control members comprise a pusher element 25a and first elastic means 31 configured to impart an axial sliding movement to said pusher element 25a. The pusher element 25a is provided with a centering portion 27 for engagement with an actuation device 50, and at least one tapered portion 29. The first elastic means 31 associated with the pusher element 25a comprise two helical springs 31a, 31b.

In the illustrated embodiment, the support structure 23 has a box-like hollow shape and in configured to be applied to a plurality of already existing molds. In addition, the support structure 23 is suitably shaped to house therein the elements forming the pressure locking/unlocking assembly 21. All the elements forming the pressure locking/unlocking assembly 21 are enclosed within the support structure 23 by a plate element 22 associated with said support structure 23 by means of appropriate screws 24.

In other embodiments, the support structure 23 of the pressure locking/unlocking assembly 21 may be formed directly on the structure of the mold 110 to be fastened.

In the illustrated embodiment, the pusher element 25a comprises a main body in the form of a plate element. The tapered portion 29 of said pusher element is defined by a pair of conical tips 29a,29b, preferably "V"-shaped, extending from said plate element toward the mold 110 when the pusher element 25a is received within the support structure 23 and the pressure locking/unlocking assembly 21 is associated with a corresponding mold 110.

In the illustrated embodiment, the centering portion 27 of the pusher element 25a comprises a peg 28 which is associated with a through hole provided centrally on said pusher element 25a and extends axially from both sides of the pusher element 25a. A first portion 28a of the peg 28 is oriented toward the mold 110 when said pressure locking/unlocking assembly 21 is associated with the mold, and a second portion 28b of the peg 28 is oriented in a direction facing away from the mold 110. The second portion 28b remains visible and accessible from the outside of the pressure locking/unlocking assembly 21 and is capable of acting as a guide for a respective actuation device 50. For this purpose, the second portion 28b is shaped in such a way as to engage in a seat 51 provided on the actuation device 50, whereas the first portion 28a is adapted to engage in the hole 17 of the stud element 12, which stud element, too, acts as a guide. In the illustrated embodiment, the second portion 28b of the peg 28 further comprises a pair of radial wings 26, the function of which will be explained below.

The locking/unlocking assembly 21 further comprises locking means 33 associated with respective first control members 35. In the illustrated embodiment, the first control members 35 comprise second elastic means 35' allowing creating an elastic connection to the locking seat 13 of the stud element 12 in a direction substantially transverse to a longitudinal axis of the stud element 12.

In the illustrated embodiment, the locking means 33 comprise two coplanar latches 33a, 33b arranged in pair within the support structure 23. The corresponding second elastic means 35' comprise helical springs 35a, 35b suitably calibrated to create an elastic connection to the locking seat 13 of the stud element 12. Particularly, the latches 33a, 33b are configured to radially engage the locking seat 13 of the stud element 12.

Advantageously, the first fastening means 11 comprise, at its end facing outwards, i.e. its end intended to receive a corresponding mold 110 when said mold is associated with a respective face 101 of the drum of the mold holder unit 100, a chamfered leading surface 19 cooperating with the pressure locking/unlocking 21 to facilitate the locking o the mold 110 to the mold holder unit 100. In the illustrated embodiment, the chamfered surface 19 is provided on the upper end of the stud element 12, i.e. on the upper element of the second portion 12b thereof. In addition, the locking means 33 of the pressure locking/unlocking assembly 21 also comprise a chamfered surface 32 oriented toward the mold holder unit 100 when said mold 110 is associated or is ready to be associated with the mold holder unit 100. Advantageously, the chamfered surface 19 of the stud element 12 and the chamfered surface 32 of the locking means 33 are complementary to each other and cooperate with each other to facilitate quick locking od the mold 110 to the mold holder unit 100 by means of a simple axial pressure exerted onto said mold.

The actuation device 50 is preferably removable and is provided with a first handle portion 50a and a second portion 50b which carries a seat 51 for the engagement with the centering portion 27 of the pusher element 25a. In a semi-automatic version, the actuation device 50 is operated by an operator, whereas in an automatic version the actuation device 50 is operated by a handling device, for example a robot or the like.

Advantageously, the first and second fastening means 11, 21 are configured in such a way that quick and stable fastening of a respective mold 110 to a respective face 101 of the drum of the mold holder unit 100 is achieved by means of a simple pressure of the mold 110 onto said face of said drum of the mold holder unit 100, and unlocking of the mold 110 from said mold holder unit takes place by means of a control exerted by the actuation device 50 onto the pusher element 25a.

In the illustrated embodiment, the helical springs 31a, 31b associated with the pusher element 25a are sandwiched between a plate-like support element 34 and the pusher element 25a. In addition, the springs 31a, 31b are suitably calibrated to keep the pusher element 25a in a first raised position in the absence of a pressure exerted on the pusher element, i.e. in order to ensure that the mold 110 is locked to the mold holder unit 100, or to bring the pusher element 25a to a second lowered position in which the tapered portion 29 of the pusher element 25a is received in a seat 30 provided between the latches 33a, 33b. In this position, the tapered position 29 of the pusher element 25a allows spreading apart the latches 33a, 33b, by acting against the force of the second elastic means 35' controlling the latches 33a, 33b, which, once they are unlocked from the locking seat 13, allow releasing the mold 110 from the mold holder unit 100.

In the illustrated embodiment, the second portion 50b of the actuation device 50 carrying the seat 51 for the engagement with the centering portion 27 of the pusher element 25a is provided with a pair of radial wings 53 extending at the seat 51 and allowing locking the pusher element 25a in its lowered position in which the springs 31a, 31b are compressed. In this lowered position, the wings 26 of the second portion 28b of the peg 28 facilitate the engagement of the pusher element 25a with the actuation device 50 in order to lock said pusher element 25a in its lowered position. In this position, removal of the mold 110 from the mold holder unit 100 is allowed.

The principle of operation of the locking device 10 according to the invention will be briefly described below.

Advantageously, in order to establish locking of a corresponding mold 110 to a respective face 101 of a drum of a mold holder unit 100 it is sufficient to apply a simple pressure in an axial direction onto the mold 110 with which the pressure locking/unlocking assembly 21 is associated, so as to engage the locking means 33 of said pressure locking/unlocking assembly 21 with the locking seat 13 provided on the first fastening means 11 associated with the mold holder unit 100.

When the mold 110 to be locked is brought proximal to a corresponding face 101 of the drum of the mold holder unit 100 and moved close thereto, the chamfered surface 32 of the latches 33a, 33b of the locking/unlocking assembly 21 comes into contact with the chamfered surface 19 of the stud element 12 and thanks to the axial pressure exerted onto the mold the latches 33a, 33b are allowed to slide downwards in the figures over the body 15 of the stud element 12 and radially engage the locking seat 13 provided on said body 15. In the illustrated embodiment, the chamfered surfaces 32 of the latches 33a, 33b define a substantially frustoconical tapered surface for the stud element 12.

The engagement or locking of the mold 110 takes place by overcoming the elastic force of the corresponding second elastic means 35' adapted to actuate the latches 33a, 33b. The latches 33a, 33b spread apart under the action of the axial pressure exerted onto the pusher element 25a and thanks to the fact that they come into abutment against the cylindrical body 15 of the stud element 12. The complementary and mutually cooperating chamfered surfaces 19, 32 facilitate the engagement of the mold 110 to the mold holder unit 100, by making the mold 110 slide downwards in the figures in an axial direction until it encounters the locking seat 13. When the latches 33a, 33b, axially sliding downwards in the figures, encounter the locking seat 13, engagement of the mold 110 to the mold holder unit 100 is achieved by means of the elastic force of the second elastic means 35' which have been compressed during axial sliding. The latches 33a, 33b radially engage the locking seat 13, thus creating an elastic connection. In this locking position, the first elastic means 31 associated with the pusher element 25a are in a raised position, i.e. they are not compressed, in order to ensure that the mold 110 remains locked to the mold holder unit 100.

The unlocking of the mold 110 takes place by means of a control exerted by the actuation device 50 onto the pusher element 25a. The actuation device 50, operated manually by an operator in a semi- automatic version, or operated by a handling device in an automatic version, engages the centering portion 27 of the pusher element 25a and by means of an axial pressure causes the tapered portion 29 of said pusher element 25a to move close to the latches 33a, 33b by overcoming the elastic force of the first elastic means 31. In particular, the conical tips 29a, 29b of the pusher element 25a are received in suitable seats 30 defined between the latches 33a, 33b and, thanks to their tapered shape, the latches become spread apart as the pusher element 25a slides axially downwards in the figures, compressing the second elastic means 35'. In this unlocking position, the latches 33a, 33b come out of the locking seat 13 provided on the stud element 12, thus allowing removal of the mold 110 from the mold holder unit 100.

By means of a rotational movement exerted onto the actuation device 50, it is possible to achieve locking of the pusher element 25a in a lowered position thereof, in which removal of the mold 110 from the mold holder unit is allowed.

Particularly, in the illustrated embodiment, in order to allow unlocking of the mold 110 it is necessary to apply an axial pressure onto the actuation device 50 and rotate said actuation device by 90°. By pressing the actuation device 50 and rotating it by 90°, the radial wings 53 of the actuation device 50 allow locking the pusher element 25a in the lowered position, in which removal of the mold 110 from the mold holder unit is allowed.

The invention further envisages a mold 110 comprising at least one locking device 10 as previously described. Referring to Fig. 1, the mold 110 according to the invention preferably comprises two locking devices 10 laterally associated with transversely opposite ends of said mold 110 in order to make fastening of the mold 110 to the mold holder unit 100 stronger and stabler.

The invention as described and illustrated is susceptible of several modifications and variations falling within the same inventive principle.

## Claims

1. Locking device (10) for fastening a mold (110) to a mold holder unit (100), comprising:
- first fastening means (11) adapted to be associated with a mold holder unit (100);
- second fastening means (20) adapted to be associated with a mold (110); **characterized in that** said first fastening means (11) comprise a locking seat (13), and **in that** said second fastening means (20) comprise locking means (33) configured to engage in said locking seat (13), first control members (35) adapted to bias said locking means (33) into engagement with said locking seat (13) and second control members (25) adapted to cause the disengagement of said locking means (33) from said locking seat (13), wherein, in the course of normal use, said locking means (33) are engaged with said locking seat (13) under the action of said first control members (35), and said second control members (25) can be actuated to disengage said locking means (33) from said locking seat (13).

2. Locking device (10) according to claim 1, further comprising an actuation device (50) configured to actuate said second control members (25) to cause the disengagement of said locking means (33) from said locking seat (13).

3. Locking device (10) according to claim 2, wherein said second fastening means (20) comprise a pressure locking/unlocking assembly (21), which in turn comprises said locking means (33), said first control members (35) and said second control members (25), wherein said second control members (25) comprise a pusher element (25a) having at least one tapered portion (29) and first elastic means (31) for imparting an axial sliding movement to said pusher element (25a).

4. Locking device (10) according to claim 3, wherein said pusher element (25a) comprises a centering portion (27), and wherein said actuation device (50) has a first handle portion (50a) and a second portion (50b) which carries a seat (51) for the engagement with said centering portion (27) of the pusher element (25a).

5. Locking device (10) according to claim 3 or 4, wherein said pusher element (25a) has a main body in the form of a plate element, and wherein said tapered portion (29) comprises a pair of conical tips (29a, 29b) axially extending from said plate element toward the mold (110) when the pressure locking/unlocking assembly (21) is associated with a corresponding mold (110).

6. Locking device (10) according to claim 3 or 4 or 5, wherein said first elastic means (31) comprise helical springs (31a, 31b) suitably calibrated to keep the pusher element (25a) in a first raised position in the absence of a pressure exerted on the pusher element (25a), or to allow the pusher element (25a) to be brought into a second lowered position.

7. Locking device (10) according to any of the preceding claims, wherein said first control means (35) comprise second elastic means (35') for biasing said locking means (33) into engagement with said locking seat (13) and creating an elastic connection to said locking seat (13) in a direction substantially transverse to the axial movement of the second control means (25).

8. Locking device (10) according to any of the preceding claims, wherein said first fastening means (11) comprise a stud element (12) comprising a cylindrical body (15) which is provided with a through or blind hole (17) and in which there are defined a first portion (12a) shaped to be associated with the mold holder unit (100) and a second portion (12b) projecting from the mold holder unit (100) and shaped to receive a mold (110) to be locked.

9. Locking device (10) according to claim 4, wherein said locking means (33) comprise at least two latches (33a, 33b) configured to radially engage the locking seat (13).

10. Locking device (10) according to claim 9, wherein the tapered portion (29) of the pusher element (25a) is received in a seat (30) provided between said latches (33a, 33b).

11. Locking device (10) according to claim 10, wherein the second portion (50b) of the actuation device (50), which second portion carries the seat (51) for engagement with the centering portion (27) of the pusher element (25a), is provided with a pair of radial wings (53) extending at the seat (51) and allowing locking the pusher element (25a) in its lowered position in which the first elastic means (31) are compressed in order to facilitate the unlocking of the mold (110) from the mold holder unit (100).

12. Locking device (10) according to any of the preceding claims, wherein said first fastening means (11) comprise a chamfered leading surface (19) and the locking means (33) also comprise a complementary chamfered surface (32) cooperating with the chamfered surface (19) to facilitate the locking of the mold (110) to the mold holder unit (100) by means of a pressure exerted on said mold (110).

13. Mold (110) comprising at least one locking device (10) as claimed in claims 1 to 12.

14. Method for removably locking a mold to a mold holder unit by means of a locking device (10) as claimed in claims 1 to 12, said method comprising the steps of:
- bringing the locking means (33) of the second fastening means (20) into engagement with the locking seat (13) provided on the first fastening means (11) under the action of first control members (35) adapted to bias said locking means (33) into engagement with said locking seat (13), thereby attaining locking of the mold (110) in a mold holder unit (100);
- actuating second control members (25) in order to disengage said locking means (33) from said locking seat (13), thereby attaining unlocking of the mold (110) from the mold holder unit (100).

15. Method according to claim 14, wherein the step of actuating the second control members (25) in order to disengage said locking means (33) from said locking seat (13) envisages the steps of:
- applying an axial pressure onto the actuation device (50) so as to bring said second control members (25) from a first raised position, in which said control members (25) are in a state in which no axial pressure is exerted on said control members (25), to a second lowered position, in which the tapered portion (29) of the second control members (25) is received in a seat provided between the locking means (33), thereby allowing to spread apart the locking means (33) and acting against the force of first control members (35) controlling the locking means (33), so as to facilitate the disengagement of the locking means (33) from the locking seat (13);
- rotating, preferably by 90°, the actuation device (50) in order to allow locking of the second control members (25) in the lowered position, in which removal of the mold (110) from the mold holder unit (100) is allowed.
